# EUROPEAN PATENT APPLICATION

(11) **EP 4 806 629 A1**
(43) Date of publication of application: **16.09.2026**
(21) Application number: 25163854.0
(22) Date of filing: 14.03.2025
(51) Int. Cl.: B32B 5/02, B32B 5/06, B32B 7/09, B32B 27/12, B32B 27/30, B32B 27/32, B32B 27/34, B32B 27/36

(54) **AUTOMOTIVE TRIM PART INCLUDING A NEEDLEFELT CARPET LAYER**

(71) Applicant: Autoneum Management AG, 8406 Winterthur (CH)
(72) Inventor: DELMAS, Bertrand, 8406 Winterthur (CH)

(57) **Abstract**

Automotive trim part comprising a carpet layer comprising a fibrous needlefelt top layer and a barrier layer whereby the barrier layer and top layer are thermally laminated to the adjacent layer. The carpet layer further comprises a film needled into the needlefelt top layer. The fibers of the needlefelt top layer are penetrated through the film layer and sandwiched between the film layer and the barrier layer whereby the penetrated fibers are trapped and locked between the laminated film layer and barrier layer upon thermal moulding of the trim part.

## Description

### Technical Field

The invention is directed to an automotive trim part including a needlefelt carpet layer and a method of producing such a trim part.

### Background

Automotive interior trim parts, like for instance flooring parts for the main flooring and/or the trunk or storage trim parts are covered with either a textile type surface solution, like a tufted or needlefelt carpets or a thermoplastic elastomer type solution, like a TPO type surface, vinyl or EPDM type surface solution. The surface solutions are engineered for desired aesthetics, haptics and durability, amongst other performance parameters. Therefore, in the automotive industry, needlefelt carpet constructions are commonly used to cover the main flooring and other areas as these give a good balance of cost, feel, appearance and performance.

These needlefelt carpets can generally be defined as structured needlefelt carpets, like velour or dilour, are produced in needling process to convert a loose fibrous structure into a densified and structured needlefelt carpet. The benefit of this type of structured needlefelt carpet is that the fibers are highly entangled in the densified foot area of the carpet whereas the pile or carpet surface has a softer, more luxurious feel. These structured needlefelt carpets may consist of at least the steps of pre-needling the loose fibrous structure into a densified and loosely entangled web; first main needling to further densify the web, whereby the web is needled, preferably equally from both directions to obtain an even entangled web throughout the thickness of the layer; a structure needling step whereby the use of structure needles enables a surface pattern on top of the visible side of the layer, while at the same time the lower part of the layer is further densified. The effect should preferably result in a looped and or a soft touch top surface and a densified foot area. For this step fork needles may be used, needled from the back of the carpet in the direction of the visible surface, the length and pile formed is maintained by needling against a bristle brush to prevent them from going flat during needling. This creates loops in the top surface.

As the automotive trim part is directly visible, great energy and development effort is expended to ensure the surface appearance of the part matches the design concept. While in the majority of cases, a single colour, most of the time a version of black, is used for the overall optics of the carpet, the exact shade is carefully considered for the overall appearance. In a minority of cases, different coloured fibers or tones of one colour fibers may be blended to obtain a more blended colour.

In all these cases the starting material is thermoplastic fibers of a certain length and defined colours. By mixing and blending fibers together a homogenous colour may be achieved in the final product. The mixing and blending of the starting fibers may be done on a mixing or blending unit combined with different openers and finalised on a card. The thus obtained felt coming from the card is than cross lapped and needled to form the final needlefelt carpet layer. This exercise is known as colour matching and may be required to achieve the desired appearance of the trim part by the car maker. Typically, several iterations of colour matching are performed to achieve the desired appearance of the final needlefelt carpet.

A thus formed and colour matched needlefelt carpet layer may be used together with one or more backing layers and moulded in a required 3D shape to form an automotive trim part, like for instance a floor covering, a trunk carpet, trim parts, a seatback cover or door panels. A structured needlefelt top layer as just described is combined with a backing layer using an adhesive. Other layers may be added to this construction to ensure further stiffness, improve acoustics or ensure easier moldability. In most cases, further adhesive is required to bond the layers. The adhesive may be applied as a film layer or scattered as a powder layer or film and powder adhesives combined, creating a complex multilayer automotive trim part.

These multilayer automotive trim parts may still have a problem with delamination of layers, mainly resulting from a bad adhesion of the glue or binder to the foot area of the needlefelt carpet. To overcome this issue, extra adhesive, commonly in the form of powder, is used to ensure good adhesion but this can lead to the issue of bleed through of glue elements. This may deteriorate the aesthetic appeal of the visible carpet surface. In addition, binder or adhesive may wick into the carpet layer and reduce the overall pile feeling of the carpet.

Another reason why it may be desirable to add more adhesive to the construction is to ensure good abrasion performance of the carpet surface, as extra adhesive in the foot area of the needlefelt carpet will anchor the surface fibers in the densified carpet foot. The benefit of improved abrasion is that over the lifetime of the automotive part, the surface will not be degraded, or degradation will happen slower, maintaining the aesthetic surface appearance for longer and ideally throughout the lifetime of the vehicle. Again, the adhesive needed to ensure the fibers are securely anchored will limit the pile or soft touch feel of the carpet surface, and as with adding extra adhesive to prevent delamination, extra adhesive to improve abrasion can again increase the possibility of bleed through of the adhesive.

Other issues commonly encountered in this type of carpet construction in automotive trim parts, especially lightweight constructions, may be warpage of the carpet surface due to temperature and humidity swings within the car cabin. The common cause for this is residual tension in the different layers of material after moulding and limited strength and stiffness in the overall construction to counter this stiffness, especially with temperature and humidity variations.

While many of today's solutions provide the desired functions, the complexity in manufacturing processes, number of manufacturing steps and different material layers required to achieve these functions has increased. Subsequent processing steps, which may involve heating and or compressing of the layers, may cause bleeding of the adhesive through to the surface, for instance during the moulding stage, where high pressure and elevated temperatures may be used.

It is the goal to provide for an alternative way of laminating needlefelt layers to barrier layers, reducing the risks of adhesive faults in the surface, while maintaining the desired surface properties as well as reducing warpage of the final trim part produced.

### Summary of Invention

The object is achieved by the automotive trim part comprising a carpet layer comprising a fibrous needlefelt top layer and a barrier layer, whereby the barrier layer and top layer are thermally laminated to the adjacent layer, according to the main claim and a method of producing such an automotive trim part according to claim 12.

In particular, by the carpet layer further comprising a film needled into the needlefelt top layer, whereby the fibers of the needlefelt top layer are penetrated through the film layer and sandwiched between the film layer and the barrier layer, and whereby the penetrated fibers are trapped and locked between the film layer and barrier layer laminated together, it is possible to obtain a good lamination without the risk of creating faulty areas on the surface.

Surprisingly, the integrated film layer not only increases the adhesion to the adjacent barrier layer but in addition enhanced the abrasion performance of the needlefelt carpet layer. It was even more surprisingly that any clips mounted through the layers needed a higher pulling force to pull them out. Showing a more overall increase in durability of the material according to the invention.

The combination of the fibers transported at least partly to the site in contact with the barrier, as well as the perforations in the film enable a stronger lamination of the layers.

Surprisingly, warping of the final moulded part measured in a climate heat aging test is reduced in comparison to trim parts with a standard PE powder, film adhesive solution.

Preferably the film layer and barrier layer are thermoplastic. Preferably the polymers in the film layer and barrier layer are compatible. Preferably the film and barrier layers are based on the same polymer type. By basing them on similar and or compatible material the adhesion between the film layer and the barrier layer will increase, optimising the bonding between the barrier and the needlefelt layer in addition.

Preferably the melting temperature of the film layer and barrier layer are below that of the fibers of the needlefelt top layer with the lowest melting temperature. Enabling only a softening and melting of the film and barrier layer but not of the needlefelt surface layer, hence maintaining the properties of in particular the needlefelt carpet surface pile.

The polymers in the film layer and barrier layer according to the invention, preferably comprise thermoplastic polymers or copolymers and are preferably selected from the group consisting of polyesters, preferably terephthalate based polyesters, such as polyethylene terephthalate (PET) and/or polybutylene terephthalate (PBT), polylactic acid (PLA); polyolefins such as poly-propylene (PP), polyethylene(PE), High Density Polyethylene (HDPE), Low Density Polyethylene (LDPE), Linear Low Density Polyethylene (LLDPE), Ultra High Molecular Weight Polyethylene (UHMWPE), Thermoplastic Polyolefin (TPO); polyamide (PA), such as PA-6, PA-6.6; ethylene vinyl acetate copolymer (EVA); Ethylene Propylene Diene Monomer (EPDM); Thermoplastic Polyurethane (TPU).

The film may be a monolayer film or a bi or multilayer film with the same or different materials, preferably as listed, preferably the layer in the film in direct contact with the adjacent layer of the automotive trim part, for instance the needlefelt top layer, may be the one with a lower melting point as the layer that is maintained as barrier layer. Preferably a PE/PA/PE film is used for at least the barrier layer.

The automotive trim part according to the invention comprises a fibrous needlefelt top layer with an integrated film layer. The trim part further comprises a barrier layer adjacent and connected to the needlefelt layer with the integrated film layer. In particularly the film layer and barrier layer are laminated together, thereby trapping and locking penetrated fibers between the layers during lamination. During lamination at least the film layer and barrier layer are heated up such that at least part of the layer is melting and adhering to adjacent layers and or fibers. For instance, in a multilayer barrier film the outer layers can melt and adhere to adjacent layers and or fibers while the middle film layer stays intact, forming a barrier against air and or water.

Surprisingly the film does not migrate or flow into the carpet pile, reducing the possibility of adversely affecting the surface visibility or haptics of the structured carpet construction. Additionally, the film layer prevents other backing layer material from migrating through the film layer towards the needlefelt carpet layer. However, heating softens the film and enables adhesion to the barrier layer as described, thereby trapping and bonding the penetrated fibers between the film and barrier layers.

The barrier layer may be used as a watertight barrier to prevent any water on the surface from accumulating behind the trim part. It may also be function as a foam barrier in case a foam layer is foamed against the back of the needlefelt carpet surface layer. And it may function as a barrier or mass layer together with a decoupling layer to form an acoustic spring mass system.

In all cases but in particularly in the case of the barrier being a mass for a mass spring system it may be advantage to increase the density of the material. To increase the density of the barrier layer fillers may be used, preferably an inert filler with high density which is at least one of calcium carbonate, calcium sulphate, barium carbonate, barium sulphate, magnesium carbonate, magnesium sulphate, alumina, clay, silica, or mixtures of two or more thereof.

Alternatively, to/or in combination with the inert filler could be one of a powder, granules or short fibers of thermoplastic material. For cost or recycling reasons, the barrier layer may contain thermoplastic fillers, preferably a similar polymer as the base polymer of the barrier layer with higher melting temperature than the base polymer.

Automotive trim part according to the invention, whereby the needlefelt top layer preferably comprises staple fibers, preferably at least one of polyester fibers, preferably terephthalate-based fibers or polylactic acid fibers, polyolefin-based fibers, polyamide fibers or natural fibers, like cotton or bast fibers, like hemp, jute, flax, kenaf or similar. Preferably the fibers used are a mixed of any of these fibers.

The structured needlefelt top layer top layer comprises staple fibers chosen from hollow fibers, hollow conjugate fibers with an intrinsic crimp, and/or solid fibers.

The fibers may be any of virgin, recycled or reclaimed polymer and/or any of virgin, recycled or reclaimed fiber source.

Preferably the needlefelt top layer is needled enough to maintain its integrity during the production process of the trim part as well as maintaining durability during the use of the trim part without the need for an additional binder in this layer.

However, it was observed that a low amount of binder would enable a better cutting of the trim part shape and or cut outs, reducing fraying of the cut lines. Preferably the binder in the top layer is not more than 15% by weight of the layer, preferably not more than 10% by weight of the layer. The binder may be added in whatever form, preferably as a binder fiber or a bicomponent fiber with a low melting component.

Preferably the binder in the needlefelt top layer is a thermoplastic binder and is least one of a polymer or copolymer of polyester, preferably a terephthalate-based polyester, preferably polyethylene terephthalate (PET) or polybutylene terephthalate (PBT), a polymer of polyolefin, preferably polypropylene (PP) or polyethylene (PE).

Preferably a binder in the initial form of staple fibers, preferably monocomponent or bicomponent staple fibers may be used, as this enables a good distribution during the forming of the initial fibrous web and the subsequent needling steps. A good distribution of the binder fibers is enhancing the locking of the fibers extending from the top layer into the backing layer.

Automotive trim part according to the invention may further comprise additional layers adjacent and preferably laminated to the barrier layer, preferably at least one of a felt, composite panel, stiffening board, open or closed cell foam, honeycomb layer, or a tufted carpet layer, or an additional carpet layer according to the invention as disclosed previously. The materials used are also preferably the same or comparable to the one disclosed. The cell foam is preferably a polyurethane based foam.

The method of making the needlefelt layer according to the invention with the steps of
- Forming a pre-blended fiber mixture by mixing and blending of the basic fibers and the binder in a standard fiber blending line. The line may include bale openers, mixing and blending units as well as dosage systems like weighing units to obtain the right combination of fibers. Preferably binders in the form of binder fibers or bicomponent fibers are used. Preferably between 10 and 30% of bicomponent fibers by weight are used as binder in the overall blend
- carding the preblended mixture to form a fibrous mat. The thus obtained fibrous mat coming from the card, is subsequently cross lapped and needled to form the final needlefelt carpet layer.

The needling may be done in a multistep needling process, an optional pre-needling, a needling and a final structural needling.

In the optional pre-needling, the carded-cross lapped felt is preferably needled from just one side - with either one or two needling zones. Specific adjustment of the penetration depth and density, depending on the final product, results in an initial densification.

Preferably, an average of 10 to 150 punches per square centimetre are made.

Pre needling may be done with for instance conical needles with multiple barbs on different levels over the length of the needle. The main reason for the pre-needling is to enable handling of the fibrous material and an initial densification.

**In** a next step the pre-needled material may be subjected to the main needling step, this may be done from preferably both sides either at the same time or in a series of needling zones with alternating direction from top or bottom side of the material. The fibers are transported and integrated into the material by barbed felting needles. In this step the material is evenly densified over the thickness of the layer. Preferably in this main needling step the film is layered on the felt material. Preferably such that the first stroke needles are first through the felt and then the film layer, such that fibers of the felt layer are transported through the perforation at the same time, thereby integrating the film in the adjacent area of the felt layer. As the needling might be more than one needle step alternating fibers may be partially transported back again in a later needle step, thereby partially looping the transported fibers back through a neighbouring hole and thereby further embedding the film into the needlefelt layer.

Surprisingly, the needling of the felt material and in a later step the forming of a structured pile is not negatively influenced by the film, showing a good densification and a nice, structured pile, while integrating the film within the lower area of the felt material. Furthermore, it was found that needling the felt helps relaxation of the material during the later moulding step, thereby reducing the shrinkage and the warpage of the trim part.

In a final step the characteristic pile like surface is created in the structure needling step using structuring needles. These surfaces are produced with a velvety or grainy character, called dilour or velour, and may also feature geometric or linear patterns. Structuring needling with specially designed structuring needles pick-up fibers from the web top surface and push fiber loops or velvets out of the back surface to form desired surface textures. Crown needle is often utilized in the structuring machines with brush conveyer for producing velour effects.

Preferably the steps of at least one main needling operation with at least one to four alternating needling steps are done followed by one structural needling step to create a final velour or dilour effect on the visible surface. A preferred pre-needling may be done to consolidate the carded and cross lapped felt and enable storage and or transport. The film is preferably introduced in the early stage of the needling either already during the pre-needling or at least before the first time the needle stroke starts on the surface facing away from the film. The earlier the film is introduced the better it is integrated into the adjacent area of the felt during the needling. Surprisingly, this enhances the locking of the fibers in the carpet pile after thermal moulding, without interfering with the densification and or the forming of the structural layer in the final needling step.

Preferably the needled fibrous layer is subjected to at least 2 needling steps, whereby at least the first step is for densifying the layer and the last step is for creating an asymmetric layering of the needlefelt layer with a densified foot area and a pile area, whereby the pile area is forming the outer surface of the needlefelt surface. Preferably in the case of 2 needling steps, the film is introduced before the first needling step.

The thus formed bilayer structure of a needlefelt carpet layer with an integrated perforated film layer, is combined with an adjacent barrier layer and optional further layers and thermally moulded into the final automotive trim part.

The film layer integrated into the needlefelt material is preferably a thermoplastic film with a melting temperature lower than the melting temperature of the fibers of the needlefelt carpet layer. Upon thermally moulding the needlefelt carpet layer including the integrated film, the integrated film melts but is not flowing, instead it will bond the adjacent fibers and the adjacent barrier layer to create a bonding between the needlefelt carpet layer and the barrier layer.

### Drawings

Figure 1 is showing a cross section of the needlefelt carpet layer to be used in the trim part according to the invention.
Figure 2 is showing a cross section of a possible trim part layout including the needlefelt carpet layer according to the invention of figure 1.
Figure 3 is showing a photo of cross section of the needlefelt layer with both layers after moulding.

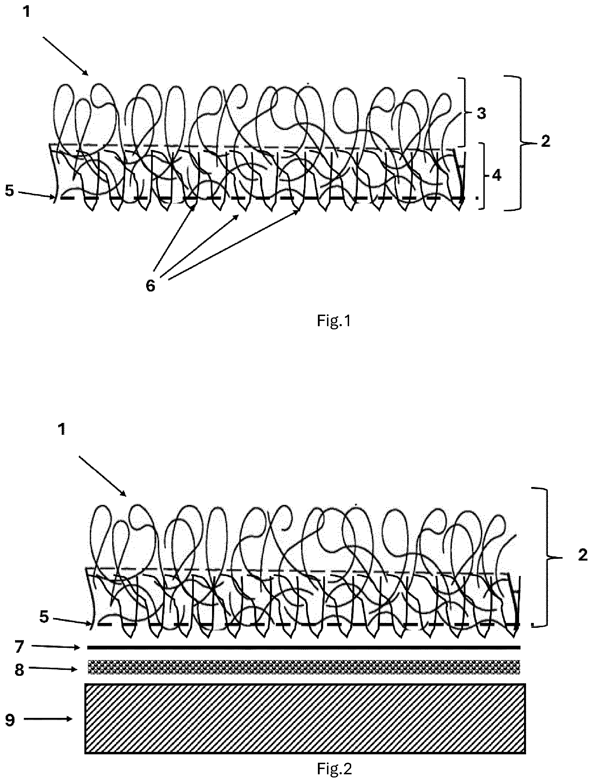

Figure 1 is showing a needlefelt carpet 1 with a needled layer 2 comprising a densified foot area 4 and a more open pile layer 3. The pile layer is the layer that is facing the user of the car or the passenger compartment and forms the surface of the trim part. During the needling of the carpet surface an additional film layer 5 is included such that the film layer gets perforated and partly embedded within the lower densified area of the carpet layer. The embedding is partly due to fibers that are pushed through the film to the back of the carpet layer and partly pulled back by the same or other needles thereby looping through 6 and around the film.

In figure 2 the needlefelt carpet including the integrated perforated film is combined with additional backing layers. For instance, in one option the needlefelt carpet layer 2 is combined with a film layer 7 to form an acoustic impervious system and or to form a watertight system. Optionally to enhance the lamination with additional backing layer 9 adhesive powder can be added.

Additional backing layer 9 can be any of a felt or foam layer as used in the industry to suffice requirements of the car makers.

Optionally a back foamed layer may be used direct against the film layer.

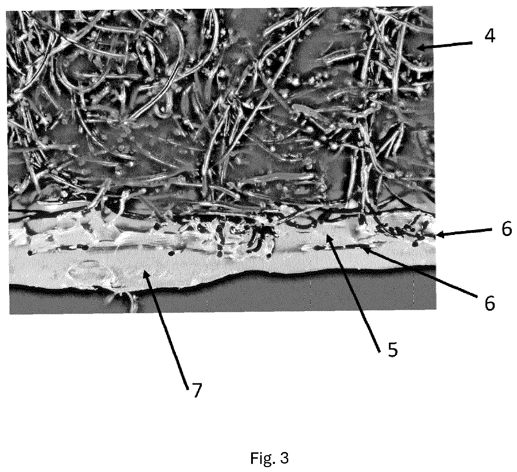

Figure 3 is showing a carpet layer according to the invention with a needlefelt top layer, the figure is only showing the foot area 4 and the barrier layer 7, whereby the barrier layer and top layer are thermally laminated surface to surface. The barrier and the film layer are fused together due to the thermal moulding process whereby both layers melt and may bind to adjacent material. It is nicely visible how fibers 6 are partially penetrated through the film layer 5 and locked between the film 5 and the barrier layer 7. Surprisingly the film layer is not migrating to the higher areas of the needlefelt top layer but is maintained in the level obtained during needling. Furthermore, the fibers that are penetrated through the film layer are not penetrating further the barrier layer thereby maintaining the integrity of the barrier layer, even after moulding in a more 3-dimensional trim part.

## Claims

1. Automotive trim part comprising a carpet layer comprising a fibrous needlefelt top layer and a barrier layer whereby the barrier layer and top layer are thermally laminated to the adjacent layer, **characterised in that** the carpet layer further comprises a film needled into the needlefelt top layer and whereby the fibers of the needlefelt top layer are penetrated through the film layer and sandwiched between the film layer and the barrier layer and whereby the penetrated fibers are trapped and locked between the laminated film layer and barrier layer.

2. Automotive trim part according to the claim 1 whereby the film layer and barrier layer are thermoplastic.

3. Automotive trim part according to claim 1 and claim 2 whereby the melting temperature of the film layer and barrier layer are below that of the fibers of the needlefelt top layer with the lowest melting temperature.

4. Automotive trim part according to the previous claims whereby the polymers in the film layer and barrier layer are compatible, preferably the film and barrier layers are based on the same polymer type.

5. Automotive trim part according to the previous claims whereby the polymers in the film layer and barrier layer are at least one from the group consisting of polyesters, preferably terephthalate based polyesters, such as polyethylene terephthalate (PET) and/or polybutylene terephthalate (PBT), polylactic acid (PLA); polyolefins such as poly-propylene (PP); polyethylene(PE), High Density Polyethylene (HDPE), Low Density Polyethylene (LDPE), Linear Low Density Polyethylene (LLDPE), Ultra High Molecular Weight Polyethylene (UHMWPE), Thermoplastic Polyolefin (TPO); polyamide (PA), such as PA-6, PA-6.6; ethylene vinyl acetate copolymer (EVA); Ethylene Propylene Diene Monomer (EPDM); Thermoplastic Polyurethane (TPU).

6. Automotive trim part according to the previous claims whereby the barrier layer may contain fillers, preferably a thermoplastic filler, preferably a similar polymer as the base polymer of the barrier layer with higher melting temperature than the base polymer, and or an inert filler, preferably one of calcium carbonate, calcium sulphate, barium carbonate, barium sulphate, magnesium carbonate, magnesium sulphate, alumina, clay, silica, or mixtures of two or more thereof.

7. Automotive trim part according to the previous claims whereby the barrier layer is a film layer, preferably a bi-layer or multilayer film.

8. Automotive trim part according to one of the previous claims, whereby the fibers of the needlefelt top layer comprises at least one of polyester fibers, preferably terephthalate-based fibers, polyolefin-based fibers, polylactic acid fibers, polyamide fibers or natural fibers, like cotton or bast fibers like hemp, jute, flax, kenaf or similar, preferably the fibers used are a combination of any of these fibers.

9. Automotive trim part according one of the previous claims, whereby the needlefelt top layer comprises a thermoplastic binder with a lower melting temperature than the fibers within the layer.

10. Automotive trim part according one of the previous claims, whereby the needlefelt top layer is asymmetrically structured, consisting of a densified foot and pile, preferably one of a dilour, velour, cut loop pile.

11. Automotive trim part according one of the previous claims further comprising additional layers adjacent and preferably laminated to the barrier layer, preferably at least one of a felt, composite panel, stiffening board, open or closed cell foam, honeycomb layer, or a tufted carpet layer, or an additional carpet layer according to claim 1.

12. Method of producing an automotive trim part according to one of the preceding claims, comprising at least the steps of;
- needling a felt material to obtain a needled fibrous layer with at least 2 needling steps;
- feeding a film layer on one side of the felt material before the first and at least before the last needling step, whereby the felt material and the film layer are needled together and whereby in each stroke the needles penetrate the film layer and transport fibers at least partially through the film layer, and whereby at least part of the fibers stay in the new transported position on the back of the film layer;
- placing the barrier layer against the penetrated fibers and film on the back of the needlefelt layer and thermal moulding the layers together, thereby adhering the barrier layer to the film layer and thereby trapping and locking the transported fibers and thereby binding the barrier layer to the needlefelt layer.

13. Method according to claim (previous), whereby the needled fibrous layer is subjected to at least 2 needling steps, whereby at least the first step is for densifying the layer and the last step is for creating an asymmetric layering of the needlefelt layer with a densified foot area and a pile area, whereby the pile area is forming the outer surface of the needlefelt surface.
